# EUROPEAN PATENT SPECIFICATION

(11) **EP 3 722 359 B1**
(45) Date of publication and mention of the grant of the patent: **29.11.2023**
(21) Application number: 18886748.5
(22) Date of filing: 17.10.2018
(51) Int. Cl.: C08L 9/00, B60C 1/00, C08K 3/36, C08K 5/053, C08K 5/5419, C08L 7/00, C08L 9/06, C08L 57/02, C08L 47/00

(54) **RUBBER COMPOSITION AND PNEUMATIC TIRE**
KAUTSCHUKZUSAMMENSETZUNG UND LUFTREIFEN
COMPOSITION DE CAOUTCHOUC ET PNEU

(30) Priority: 06.12.2017 JP 2017234575
(43) Date of publication of application: 14.10.2020
(73) Proprietor: Bridgestone Corporation, Tokyo 104-8340 (JP)
(72) Inventor: SHODA, Yasuhiro, Tokyo 104-8340 (JP)
(74) Representative: Marks & Clerk LLP
(86) International application number: PCT/JP2018/038577
(87) International publication number: WO 2019/111546

(56) References cited:
- WO-A1-2017/203766
- CN-A- 104 231 345
- JP-A- H07 118 457
- JP-A- H11 310 009
- JP-A- 2013 213 129
- JP-A- 2013 213 129
- JP-A- 2016 003 324
- JP-A- 2016 003 325
- JP-A- 2016 006 135
- JP-B1- 6 228 335

## Description

### Technical Field

The present invention relates to a rubber composition and a pneumatic tire.

### Background Art

PTL 1 discloses, with a purpose of providing a rubber composition for a tire having enhanced abrasion resistance and braking performance on wet road surface and on ice in a good balance, a rubber composition for a tire, containing (A) a diene-based rubber composed of 20 to 80% by weight of a natural rubber and/or a polyisoprene rubber and 80 to 20% by weight of a butadiene rubber and (B) 1 to 50 parts by weight of a terpene-based resin relative to 100 parts by weight of the diene-based rubber (A), the terpene-based resin having a glass transition temperature of -10°C or lower.

PTL 2 discloses a rubber composition which is useful as a tread for a winter tire, the rubber composition containing at least a diene elastomer, a liquid plasticizer in an amount more than 30 phr, and a reinforcing filler in an amount between 50 phr and 150 phr, characterized by containing magnesium sulfate fine particles in an amount between 5 phr and 40 phr. JP 6 228335 B1 discloses a cap tread rubber composition characterized by a good balance between the low fuel consumption, the abrasion resistance, the chipping resistance, the performance on ice and snow at high speed, and the performance on a low temperature road surface free from snow and ice, wherein the composition comprises natural rubber, a polybutadiene rubber and a styrenebutadiene rubber, a filler and two different types of softeners.

### Citation List

### Patent Literature

PTL 1: JP 2007-321093 A
PTL 2: JP 2011-528735 T

### Summary of Invention

### Technical Problem

A known technique for enhancing the performance on ice of a tire involves increasing the amounts of softening agents in the rubber composition. However, a formulation having increased amounts of softening agents has a problem in achievement of a good balance between the low hysteresis loss and the crack resistance.

An object of the present invention is to provide a rubber composition from which a crosslinked rubber composition having a good balance between the low heat generation property and the crack resistance can be obtained, and to provide a pneumatic tire having a good balance between the low hysteresis loss and the crack resistance.

### Solution to Problem

As a result of intensive studies, the present inventor has found that, by decreasing the amount of a softening agent that has high affinity to natural rubber and incorporating a linear polyhydric alcohol, the balance between low hysteresis loss and crack resistance of a tire can be improved even when the amounts of softening agents are increased.

Specifically, the present invention relates to the following <1> to <8>.
<1> A rubber composition containing: a rubber component (A) containing a natural rubber and at least one butadiene-based rubber selected from the group consisting of a polybutadiene rubber and a styrene butadiene rubber, the natural rubber being contained in an amount of 30% by mass or more; a filler (B); 30 to 55 parts by mass of a softening agent (C) relative to 100 parts by mass of the rubber component (A); and 1 to 6 parts by mass of a linear polyhydric alcohol (D) relative to 100 parts by mass of the rubber component (A), wherein the softening agent (C) contains a softening agent (C1) which has a high affinity to the natural rubber in an amount of 0 parts by mass or more and less than 15 parts by mass relative to 100 parts by mass of the rubber component (A) and contains a softening agent (C2) which has a high affinity to the butadiene-based rubber in an amount of 10 parts by mass or more relative to 100 parts by mass of the rubber component (A).
<2> The rubber composition according to <1>, wherein the polyhydric alcohol (D) is a tetra- or higher hydric alcohol.
<3> The rubber composition according to <1> or <2>, wherein the polyhydric alcohol (D) has a melting point of 170°C or lower.
<4> The rubber composition according to any one of <1> to <3>, wherein a silane coupling agent is further incorporated and the filler (B) contains a silica.
<5> The rubber composition according to any one of <1> to <4>, wherein the rubber component (A) contains a polybutadiene rubber.
<6> The rubber composition according to any one of <1> to <5>, wherein the softening agent (C 1) is at least one selected from the group consisting of a C5-based resin, a terpene-based resin, and a liquid polyisoprene having a molecular weight of 50,000 or lower.
<7> The rubber composition according to any one of <1> to <6>, wherein the softening agent (C2) contains at least one selected from the group consisting of a C5C9 resin, a C9-based resin, a terpene-aromatic compound-based resin, a phenolic resin, and a liquid polybutadiene rubber having a vinyl bond content of 25% or less.
<8> A pneumatic tire produced by using the rubber composition according to any one of <1> to <7>.

### Advantageous Effects of Invention

The present invention can provide a rubber composition from which a crosslinked rubber composition having a good balance between the low heat generation property and the crack resistance can be obtained. The present invention can also provide a pneumatic tire having a good balance between the low hysteresis loss and the crack resistance.

### Description of Embodiments

The present invention is illustrated and described in detail below based on embodiments thereof.

In the following description, the wording "A to B" indicating the numerical range represents a numerical range including the end points A and B, that is, "A or more and B or less" (when A < B) or "A or less and B or more" (when B < A).

Parts by mass and % by mass are synonymous with parts by weight and % by weight, respectively.

### <Rubber composition>

The rubber composition of the present invention contains: a rubber component (A) containing a natural rubber and at least one butadiene-based rubber selected from the group consisting of a polybutadiene rubber and a styrene butadiene rubber, the natural rubber being contained in an amount of 30% by mass or more; a filler (B); 30 to 55 parts by mass of a softening agent (C) relative to 100 parts by mass of the rubber component (A); and 1 to 6 parts by mass of a linear polyhydric alcohol (D) relative to 100 parts by mass of the rubber component (A), wherein the softening agent (C) contains a softening agent (C1) which has a high affinity to the natural rubber in an amount of 0 parts by mass or more and less than 15 parts by mass relative to 100 parts by mass of the rubber component (A) and contains a softening agent (C2) which has a high affinity to the butadiene-based rubber in an amount of 10 parts by mass or more relative to 100 parts by mass of the rubber component (A).

Note that, the "butadiene-based rubber" in the present invention refers to "at least one selected from the group consisting of a polybutadiene rubber and a styrene butadiene rubber" and does not include a rubber that contains a butadienederived unit, such as an acrylonitrile-butadiene rubber, which is mentioned as an example of another synthetic rubber as described later.

When the rubber composition has the above configuration, a vulcanized rubber obtained from the rubber composition of the present invention has a good balance between the low heat generation property and the crack resistance, and a pneumatic tire obtained from the rubber composition of the present invention has a good balance between the low hysteresis loss and the crack resistance.

The reason is not clear but is presumed as follows.

For improving the performance on ice of a pneumatic tire (hereinafter sometimes referred to as a "tire"), a technique of increasing the amount of a softening agent in the rubber composition has conventionally been used. However, in a formulation in which the amount of a softening agent is merely increased with no consideration for the rubber component used, it is difficult to improve the low hysteresis loss and the crack resistance of the tire in a good balance.

For example, in a system in which a rubber composition contains a terpene-based resin as in PTL 1, the terpene-based resin, which has an isoprene skeleton and has an affinity to natural rubber, allows the resulting crosslinked rubber composition to be soft. Thus, the performance on ice of the resulting tire has been improved, whereas the crack resistance thereof has been insufficient. In a system in which a rubber composition contains an oil as in PTL 2, when the content of the oil is as much as 30 parts by mass or more relative to 100 parts by mass of the rubber component, the fracture characteristics of the rubber has been deteriorated and thus the crack resistance thereof has been insufficient.

In contrast, the rubber composition of the present invention contains a softening agent in an amount as large as 30 parts by mass or more relative to 100 parts by mass of the rubber component (A), while, in the softening agent (C), the content of the softening agent (C1) which has a high affinity to the natural rubber is reduced to a small level, and the softening agent (C2) which has a high affinity to the butadiene-based rubber is incorporated. This allows for a crosslinked rubber composition having a softness while suppressing an excessive softness.

Although the detailed mechanism has not been elucidated, in the rubber composition of the present invention which contains the linear polyhydric alcohol (D) together with the rubber component, the hydroxy groups in the linear polyhydric alcohol and the natural rubber in the rubber component presumably interact with each other. When a large amount of a softening agent is incorporated, there is a concern about reduction in the interaction between the natural rubber in the rubber component and the polyhydric alcohol. However, the rubber composition contains a softening agent in an amount as large as 30 parts by mass or more relative to 100 parts by mass of the rubber component (A), while in the softening agent (C), the content of the softening agent (C1) which has a high affinity to the natural rubber is reduced to a small level and the softening agent (C2) which has a high affinity to the butadiene-based rubber is incorporated. It is considered that the natural rubber and the polyhydric alcohol can consequently secure an effect of the interaction, resulting in a crosslinked rubber composition that is excellent in the low heat generation property and the crack resistance.

The present invention will be described in detail below.

### [Rubber component (A)]

The rubber composition of the present invention contains a rubber component (A) containing a natural rubber and at least one butadiene-based rubber selected from the group consisting of a polybutadiene rubber and a styrene butadiene rubber, the natural rubber being contained in an amount of 30% by mass or more.

If the rubber component (A) does not contain 30% by mass or more of a natural rubber, a crosslinked rubber composition excellent in the crack resistance and the low heat generation property cannot be obtained. The content of the natural rubber in the rubber component (A) is preferably 35 to 60% by mass, and more preferably 35 to 50% by mass.

From the viewpoint of obtaining a crosslinked rubber composition having a good balance between the crack resistance and the low heat generation property, the rubber component (A) further contains at least one butadiene-based rubber selected from the group consisting of a polybutadiene rubber (BR) and a styrene butadiene rubber (SBR).

The rubber component (A) may further contain a synthetic rubber other than polybutadiene rubbers and styrene butadiene rubbers (referred to as another synthetic rubber).

As another synthetic rubber, a synthetic diene-based rubber is preferably used from the viewpoint of providing softness and elasticity to the crosslinked rubber composition and the tire. Examples of synthetic diene-based rubbers include a synthetic isoprene rubber, an ethylene-propylene-diene terpolymer rubber, a chloroprene rubber, a butyl rubber, a halogenated butyl rubber, and an acrylonitrile-butadiene rubber. One of the synthetic diene-based rubbers may be used alone or two or more thereof may be used together.

The content of the polybutadiene rubber and the styrene butadiene rubber in the rubber component (A) in total is preferably 40 to 65% by mass, and more preferably 50 to 65% by mass.

When the rubber component (A) further contains another synthetic rubber, the total content of the polybutadiene rubber, the styrene butadiene rubber, and the other synthetic rubber, that is, the total content of the synthetic rubbers is preferably 65% by mass or less.

Since the polybutadiene rubber and the styrene butadiene rubber have low affinity to natural rubber, the rubber component (A) is likely to be separated into a natural rubber phase and a butadiene-based rubber phase.

In the rubber composition of the present invention, the softening agent (C2) which has a high affinity to the butadiene-based rubber, that is, the softening agent (C2) which has a low affinity to the natural rubber is likely to be distributed to the butadiene-based rubber phase in the rubber component (A). When, in the softening agent (C), the content of the softening agent (C1) which has a high affinity to the natural rubber is reduced to a small level and the softening agent (C2) which is likely to be distributed to the butadiene-based rubber phase is contained in an amount of 10 parts by mass or more relative to 100 parts by mass of the rubber component (A), a crosslinked rubber composition having a good balance between the crack resistance and the low heat generation property can be obtained.

The butadiene-based rubber preferably contains a polybutadiene rubber.

When the rubber component (A) further contains another synthetic rubber, a synthetic rubber having a low affinity to the natural rubber is preferably contained. Specifically, a synthetic rubber not having an isoprene skeleton is preferably used, and such a synthetic diene-based rubber as described above other than synthetic isoprene rubbers is preferably used.

As the polybutadiene rubber, from the viewpoint of improving the crack resistance, a high-cis-polybutadiene rubber is preferred. High -cis-polybutadiene rubber refers to a high-cis-polybutadiene rubber having a cis-1,4-bond content in the 1,3-butadiene units of 90% or more and 99% or less as measured by FT-IR. The cis-1,4-bond content in the 1,3-butadiene units in the high-cis-polybutadiene rubber is preferably 95% or more and 99% or less.

The method of producing the high-cis-polybutadiene rubber is not particularly limited, and may be a known method. An example is a method in which butadiene is polymerized using a neodymium catalyst.

High-cis-polybutadiene rubbers are commercially available, and examples include "BR01" and "T700" manufactured by JSR Corporation and "UBEPOL BR150L" manufactured by Ube Industries, Ltd.

### [Filler (B)]

The rubber composition of the present invention contains a filler (B), such as a carbon black, a silica, and aluminum hydroxide. If the rubber composition does not contain the filler (B), a crosslinked rubber composition and a tire having the crack resistance cannot be obtained.

The carbon black is not particularly limited, and can be appropriately selected according to the purpose. The carbon black is preferably, for example, FEF, SRF, HAF, ISAF, or SAF grade one, and more preferably HAF, ISAF, or SAF grade one.

The silica is not particularly limited, and, for example, a general grade silica or a special silica surface-treated with a silane coupling agent or the like can be used according to the use purpose. As the silica, for example, a wet method silica is preferably used. When the filler (B) contains a silica, from the viewpoint of further improving the crack resistance of the crosslinked rubber composition and the tire, it is preferred that a silane coupling agent is further incorporated in the rubber composition.

As the filler (B), one of the fillers may be used alone or two or more thereof may be used.

The content of the filler (B) in the rubber composition is preferably 50 to 100 parts by mass as the entire filler relative to 100 parts by mass of the rubber component, and more preferably 60 to 90 parts by mass.

### [Softening agent (C)]

The rubber composition of the present invention contains 30 to 55 parts by mass of a softening agent (C) relative to 100 parts by mass of the rubber component (A), and the softening agent (C) contains a softening agent (C 1) which has a high affinity to the natural rubber in an amount of 0 parts by mass or more and less than 15 parts by mass relative to 100 parts by mass of the rubber component (A) and contains a softening agent (C2) which has a high affinity to the butadiene-based rubber in an amount of 10 parts by mass or more relative to 100 parts by mass of the rubber component (A).

In the present invention, a softening agent refers to an oil, a resin, and a liquid polymer having an average weight molecular weight of 50,000 or less which are usually used as a softening agent for a resin and a rubber. Specific examples of softening agents include a compound having an isoprene main skeleton, such as a C5-based resin, a terpene-based resin, or a liquid polyisoprene having a weight average molecular weight of 50,000 or less, and also include a C5C9-based resin, a C9-based resin, a terpene-aromatic compound-based resin, a phenolic resin, and a liquid polybutadiene rubber having a vinyl bond content of 25% or less.

As described above, when the rubber composition contains 30 parts by mass or more of a softening agent relative to 100 parts by mass of the rubber component (A), the crack resistance has conventionally been reduced and thus a good balance with the low heat generation property in the crosslinked rubber composition (the low hysteresis loss in the tire) has not been obtained. However, in the present invention, by suppressing the content of the softening agent (C 1) which has a high affinity to the natural rubber to less than 15 parts by mass relative to 100 parts by mass of the rubber component (A) and containing the softening agent (C2) which has a high affinity to the butadiene-based rubber in a specific amount, both the low heat generation property and the crack resistance of the crosslinked rubber composition, and both the low hysteresis loss and the crack resistance of the tire, can be achieved.

When the content of the softening agent (C) in the rubber composition is more than 55 parts by mass, the resulting crosslinked rubber composition and tire become too soft and the crack resistance is reduced. When the content of the softening agent (C) in the rubber composition is less than 30 parts by mass, the resulting tire is poor in the performance on ice.

From the viewpoint of improving the balance between the low heat generation property and the crack resistance of the crosslinked rubber composition and improving the balance between the low hysteresis loss and the crack resistance of the tire, the content of the softening agent (C) in the rubber composition is preferably 30 to 52 parts by mass relative to 100 parts by mass of the rubber component (A), more preferably 32 to 50 parts by mass, and further preferably 34 to 47 parts by mass.

### [Softening agent (C1)]

The softening agent (C) may contain the softening agent (C 1) which has a high affinity to the natural rubber, but the content thereof in the softening agent (C) is less than 15 parts by mass relative to 100 parts by mass of the rubber component (A). If the content of the softening agent (C1) in the softening agent (C) is 15 parts by mass or more relative to 100 parts by mass of the rubber component (A), a good balance between the low heat generation property and the crack resistance of the crosslinked rubber composition and between the low hysteresis loss and the crack resistance of the tire cannot be obtained. The content of the softening agent (C1) in the softening agent (C) is preferably 10 parts by mass or less relative to 100 parts by mass of the rubber component (A), and more preferably 5 parts by mass or less. The content is preferably 0 parts by mass, that is, the softening agent (C1) is preferably not contained.

Here, the softening agent (C1) which has a high affinity to the natural rubber refers to a softening agent having a solubility parameter (SP value) that is close to the SP value of the natural rubber. The more the SP values are closed, the higher the affinity.

The SP value difference which is the difference between the SP value of the natural rubber (SP1) and the SP value of the softening agent (C1) (SP2) (| SP1-SP2 |) is 0.30 (cal/cm³)^{1/2} or less, and preferably 0.15 (cal/cm³)^{1/2} or less.

The SP values of the natural rubber and the softening agent can be calculated according to the Fedors method.

An example of the softening agent (C1) which has a high affinity to the natural rubber is a compound having an isoprene main skeleton, and specific examples thereof include at least one selected from the group consisting of a C5-based resin, a terpene-based resin, a liquid polyisoprene having a weight average molecular weight of 50,000 or less, a myrcene (co)polymer, and orange oil. The content of the softening agent (C1) which has a high affinity to the natural rubber is preferably small, and when it is used, among the above, the C5-based resin is preferably used.

### (C5-based resin)

C5 resins include aliphatic hydrocarbon resins and alicyclic hydrocarbon resins.

Examples of aliphatic hydrocarbon resins include petroleum resins produced by polymerization of a C5 petroleum fraction. Examples of petroleum resins produced mainly from high purity 1,3-pentadiene include the trade name "Quintone 100" series (A100, B170, K100, M100, R100, N295, U190, S100, D100, U185, P195N, etc.) manufactured by Zeon Corporation. Other examples of petroleum resins produced by polymerization of a C5 petroleum fraction include the trade name "Escorez" series (1102, 1202(U), 1304, 1310, 1315, 1395, etc.) manufactured by Exxon Mobil Corporation and the trade name "HI-REZ" series (G-100X, -T-100X, -C-110X, -R-100X, etc.) manufactured by Mitsui Chemicals Inc.

Examples of alicyclic hydrocarbon resins include a cyclopentadiene petroleum resin produced mainly from cyclopentadiene extracted from a C5 fraction and a dicyclopentadiene petroleum resin produced mainly from dicyclopentadiene in a C5 fraction. Examples of cyclopentadiene petroleum resins produced mainly from high purity cyclopentadiene include the trade name "Quintone 1000" series (1325, 1345, etc.) manufactured by Zeon Corporation. Furthermore, examples of dicyclopentadiene petroleum resins include the trade name "Marukarez" series (M-890A, M-845A, M-990A, etc.) manufactured by Maruzen Petrochemical.

### (Terpene-based resin)

Terpene-based resin refers to resins produced manly from naturally occurring turpentine oil or orange oil. Examples thereof include the trade name "YS resin" series (PX-1250, TR-105, etc.) manufactured by Yasuhara Chemical Co. Ltd. and the trade name "Piccolyte" series (A115, S115, etc.) manufactured by Hercules.

### (Liquid polyisoprene)

The liquid polyisoprene is not particularly limited as long as it has a weight average molecular weight of 50,000 or less. From the viewpoint of affinity to the natural rubber, a homopolymer of isoprene having an isoprene main skeleton is preferred. The liquid polyisoprene has a weight average molecular weight of preferably 2,500 or more, and more preferably 8,000 to 40,000.

### [Softening agent (C2)]

The softening agent (C) contains 10 parts by mass or more of a softening agent (C2) which has a high affinity to the butadiene-based rubber (at least one selected from the group consisting of a polybutadiene rubber and a styrene butadiene rubber) relative to 100 parts by mass of the rubber component (A).

The softening agent (C2) has a high affinity to the butadiene-based rubber, that is, it is a softening agent that has a low affinity to the natural rubber and has a solubility parameter (SP) value that is far from the SP value of the natural rubber. The SP value difference, which is a difference between the SP value of the natural rubber (SP1) and the SP value of the softening agent (C2) (SP3) (I SP1-SP3|), is more than 0.30 (cal/cm³)^{1/2}, and more preferably more than 0.50(cal/cm³)^{1/2}.

If the content of the softening agent (C2) in the softening agent (C) is less than 10 parts by mass relative to 100 parts by mass of the rubber component (A), a crosslinked rubber composition having a good balance between the low heat generation property and the crack resistance and a tire having a good balance between the low hysteresis loss and the crack resistance cannot be obtained.

From the above viewpoint, the content of the softening agent (C2) in the softening agent (C) is preferably 10 to 55 parts by mass relative to 100 parts by mass of the rubber component (A), more preferably 10 to 40 parts by mass, further preferably 12 to 35 parts by mass, and furthermore preferably 13 to 28 parts by mass.

Examples of the softening agents (C2) include a C5C9 resin, a C9-based resin, a terpene-aromatic compound-based resin, a phenolic resin, and a liquid polybutadiene rubber having a vinyl bond content of 25% or less.

In the rubber composition of the present invention, the rubber component (A) preferably contains a natural rubber and a synthetic rubber, and as the synthetic rubber, the rubber component (A) preferably contains a polybutadiene rubber. In this case, the softening agent (C2) is preferably distributed to a synthetic rubber phase, and more preferably distributed to a polybutadiene rubber phase.

### (C5C9-based resin)

C5C9-based resins include one or more petroleum resins selected from aromatic-modified aliphatic petroleum resins and aliphatic-modified aromatic petroleum resins.

C5C9-based resins are solid polymers obtained by polymerization of a petroleum-derived C5-C11 fraction, and include aromatic-modified aliphatic petroleum resins and aliphatic-modified aromatic petroleum resins, which are divided depending on the ratio of components.

Aromatic-modified aliphatic petroleum resin refers to a C5C9-based resin that contains, among the C5-C11 fraction, an aliphatic fraction more than the aromatic fraction by mass. Aliphatic-modified aromatic petroleum resin refers to a C5C9-based resin that contains, among the C5-C11 fraction, an aromatic fraction equal to or more than the aliphatic fraction by mass. Among the C5C9-based resins, from the viewpoint of the affinity to the butadiene-based rubber, the aliphatic-modified aromatic petroleum resins are preferred.

### (C9-based resin)

C9-based resins include C9-based synthetic petroleum resins, which are solid polymers obtained by polymerization of a C9 fraction using a Friedel-Crafts catalyst, such as AlCl₃ or BF₃. Examples thereof include copolymers each mainly containing indene, methylindene, α-methylstyrene, or vinyltoluene.

### (Terpene-aromatic compound-based resin)

Terpene-aromatic compound-based resins include terpene phenolic resins, and specific examples thereof include the trade name "YS Polyster" series (U-series including U-130 and U-115 and T-series including T-115, T-130, and T-145) manufactured by Yasuhara Chemical Co. Ltd. and the trade name "TAMANOL 901" manufactured by Arakawa Chemical Industries.

### (Phenolic resin)

As the phenolic resin, a phenol-formaldehyde resin, a resorcinformaldehyde resin, and a cresol-formaldehyde resin are preferred, and a phenol-formaldehyde resin is particularly preferred.

### (Liquid polybutadiene rubber)

Liquid polybutadiene rubbers include liquid polybutadiene rubbers having a vinyl bond content of 25% or less. A vinyl bond content of 25% or less can provide a crosslinked rubber composition and a tire with softness. The liquid polybutadiene rubber preferably has a vinyl bond content of 5% or more. The liquid polybutadiene rubber preferably has a weight average molecular weight of 50,000 or less and preferably 2,500 or more, and further preferably 8,000 to 40,000.

As the softening agents (C2), among them, a C9-based resin and a liquid polybutadiene rubber are preferred.

### [Another softening agent (C3)]

The softening agent (C) may contain a softening agent other than the softening agent (C1) and the softening agent (C2), that is, another softening agent (C3) that has a less affinity both to the natural rubber and to the butadiene-based rubber.

An example of another softening agent (C3) is an oil.

As the oil, a process oil is exemplified and examples thereof include paraffin oils, naphthene-based oils, liquid paraffin oils, petroleum asphalt, and aroma oils.

The content of another softening agent (C3) in the rubber composition may be within the difference between the content of the softening agent (C) [30 to 55 parts by mass relative to 100 parts by mass of the rubber component (A)] and the content of the softening agent (C 1) and the softening agent (C2), and preferably 15 to 25 parts by mass.

### [Linear polyhydric alcohol (D)]

The rubber composition of the present invention contains 1 to 6 parts by mass of a linear polyhydric alcohol (D) relative to 100 parts by mass of the rubber component (A).

Here, polyhydric alcohol means alcohols having three or more hydroxy groups in one molecule.

When the content of the linear polyhydric alcohol (D) in the rubber composition is less than 1 parts by mass relative to 100 parts by mass of the rubber component (A), a crosslinked rubber composition having a good balance of the low heat generation property and the crack resistance cannot be obtained. Meanwhile, when the content of the linear polyhydric alcohol (D) in the rubber composition is more than 6 parts by mass relative to 100 parts by mass of the rubber component (A), the crack resistance of the resulting crosslinked rubber composition and tire is reduced, and the low heat generation property of the crosslinked rubber composition and the low hysteresis loss of the tire are likely to be deteriorated.

From the same viewpoints, the content of the linear polyhydric alcohol (D) in the rubber composition is preferably 1.2 to 5.5 parts by mass relative to 100 parts by mass of the rubber component (A), more preferably 1.5 to 4.0 parts by mass, and further preferably 1.5 to 3.5 parts by mass.

From the viewpoint of uniformly dispersing the linear polyhydric alcohol (D) in the rubber component in kneading of the rubber composition, the linear polyhydric alcohol (D) has a melting point of preferably 170°C or lower, more preferably 160°C or lower, further preferably 145°C or lower, and furthermore preferably 130°C or lower. The melting point of the linear polyhydric alcohol (D) is preferably 50°C or higher.

From the viewpoint of improving the crack resistance of the crosslinked rubber composition and the tire, the linear polyhydric alcohol (D) preferably has a larger number of hydroxy groups in one molecule, and specifically is preferably tetra- or higher hydric. On the other hand, from the viewpoint of obtaining a desired melting point, the number of hydroxy groups is preferably 10 or less. The number of hydroxy groups in one molecule is preferably 4 to 10, and more preferably 5 to 8. In other words, the linear polyhydric alcohol (D) is preferably tetra- to decahydric, and more preferably penta- to octahydric.

The linear polyhydric alcohol (D) is preferably a compound which is a linear aliphatic hydrocarbon having 4 to 10 carbon atoms and having three or more hydroxy groups substituted thereon, and the carbon number is more preferably 5 to 8. The aliphatic hydrocarbon may be either a saturated aliphatic hydrocarbon or an unsaturated aliphatic hydrocarbon, but is preferably a saturated aliphatic hydrocarbon.

From the viewpoint of suppressing volatilization of the linear polyhydric alcohol (D) in kneading and crosslinking the rubber composition, the linear polyhydric alcohol (D) has a boiling point of preferably 160°C or higher, more preferably 180°C or higher, and further preferably 200°C or higher. The upper limit is not particularly defined, but the boiling point is preferably 500°C or lower, and more preferably 400°C or lower.

As the linear polyhydric alcohol (D), a sugar alcohol is exemplified, and specific examples thereof include tetoritols, such as erythritol (boiling point: 329 to 331°C, melting point: 121°C) and threitol (boiling point: 330°C, melting point: 88 to 90°C); pentitols, such as arabitol, xylitol (boiling point: 216°C, melting point: 92 to 96°C), and ribitol; hexitols, such as sorbitol (boiling point: 296°C, melting point: 95°C), mannitol (boiling point: 290 to 295°C, melting point: 166 to 168°C), and galactitol (boiling point: 275 to 280°C, melting point: 98 to 100°C); heptitols, such as volemitol; octitols, such as D-erythro-D-galactoctitol; nonitols; and decitols.

The configuration of the sugar alcohol is not particularly limited, and the sugar alcohol may be the D-isomer or the L-isomer, or may be a DL-isomer containing the D-isomer and the L-isomer at any ratio.

Among them, mannitol, galactitol, xylitol, and sorbitol are preferred examples in the present invention. Xylitol and sorbitol are more preferred and sorbitol is further preferred.

### [Other components]

The rubber composition of the present invention may contain other components in addition to the components mentioned above.

These other components are not particularly limited, and additives commonly used in the rubber industry, such as an antioxidant, a vulcanization accelerator, a vulcanizing agent (for example, sulfur), a vulcanization accelerator, a vulcanization acceleration aid (for example, zinc oxide, a fatty acid, such as stearic acid), and a vulcanization retarder, may be appropriately selected and incorporated to the extent that does not impair the purpose of the present invention. When the rubber composition of the present invention is used for production of a studless tire, the rubber composition may further contain a foaming agent, a foaming auxiliary, short fibers, and the like.

### <Preparation of rubber composition>

The rubber composition of the present invention may be prepared by mixing the above components and kneading the mixture using a kneader, such as a Banbury mixer, a roll, or an internal mixer.

Here, the amounts of the rubber component (A), the filler (B), and the softening agent (C), the linear polyhydric alcohol (D) and others to be mixed are the same as the amounts which are already described as the contents in the rubber component.

The components may be kneaded in one stage or in two or more divided stages. In an example of the method, the rubber component (A), the linear polyhydric alcohol (D), and the other components to be incorporated except for a vulcanizing agent and a foaming agent were kneaded in a first stage, and a vulcanizing agent and a foaming agent are kneaded therein in a second stage.

The maximum temperature in the first stage of kneading is preferably 130 to 170°C, and the maximum temperature in the second stage is preferably 90 to 120°C.

### <Crosslinked rubber composition>

The crosslinked rubber composition in the present invention is obtained by crosslinking the rubber composition of the present invention described above.

When the rubber composition contains a foaming agent, foaming also occurs in crosslinking to thus produce a crosslinked rubber composition that has been crosslinked while having air bubbles therein.

The method of crosslinking the rubber composition is not particularly limited, and a known crosslinking method can be applied. Note that an unvulcanized rubber composition may be molded before crosslinking. In a possible example, an uncrosslinked rubber composition is subjected to a precrosslinking step to temporarily obtain a semi-crosslinked rubber, which is then molded and then subjected to main-crosslinking, thereby obtaining a crosslinked rubber.

### <Pneumatic tire >

The rubber composition of the present invention is used in various rubber products, and is suitably used as a tread member of a tire. Examples of gases to be filled in a pneumatic tire include, in addition to the normal air or an air having a regulated oxygen partial pressure, inert gases, such as nitrogen, argon, and helium.

When the rubber composition of the present invention is used in a tire, the part is not limited to a tread member of a tire, and the rubber composition may be used in a base tread, a side wall, a side-reinforcing rubber, a bead filler, and the like.

Besides the tire application, the rubber composition of the present invention can be used for a rubber vibration insulator, a seismic insulation rubber, a belt (conveyer belt), a rubber crawler, various hoses, moran, and the like.

### Examples

The present invention will be described in more detail below with reference to examples, but the present invention is not to be limited to the following examples.

### <Components to be mixed in rubber composition>

The components to be mixed in rubber compositions of Examples and Comparative Examples are as follows.

### [Rubber component (A)]

- Natural rubber: TSR20
- Polybutadiene rubber: trade name "BR01" manufactured by JSR Corporation

### [Filler (B)]

- Carbon black: SAF, ASAHI #105 manufactured by Asahi Carbon, Co. Ltd.
- Silica: NIPSIL AQ manufactured by Tosoh Silica Corporation

### [Softening agent (C)]

### (Softening agent (C1))

· C5-based resin: HI-REZ G-100X manufactured by Mitsui Petrochemical Industries, Ltd.

### (Softening agent (C2))

· C9-based resin: Neopolymer 140 manufactured by Nippon Petrochemicals
· Liquid polybutadiene rubber: Ricon 131 manufactured by Cray Valley (Softening agent (C3))
· Oil: petroleum hydrocarbon process oil (DAIHANA PROCESS OIL NS-28 manufactured by Idemitsu Kosan Co. Ltd.

### [Linear polyhydric alcohol (D)]

· Linear polyhydric alcohol (D): Sorbitol (manufactured by Kanto Kagaku, hydroxy group number: 6, Carbon number: 6)

### [Other components]

- Vulcanization accelerator CZ: N-cyclohexyl-2-benzothiazolylsulfenamide (Nocceler CZ) manufactured by Ouchi Sinko Chemical Industrial, Co. Ltd.
- Vulcanization accelerator MBTS: di-2-benzothiazolyldisurfide (Nocceler DM-P) manufactured by Ouchi Sinko Chemical Industrial, Co. Ltd.

### <Production and evaluation of crosslinked rubber composition>

### (Examples 1 to 5 and Comparative Examples 1 to 5)

The components to be mixed in the rubber composition described above were kneaded using a Banbury mixer according to the formulation shown in table 1 to prepare a sample rubber composition. Sulfur, which is a vulcanizing agent, and a vulcanization accelerator were added at the final stage of kneading.

The resulting rubber composition was vulcanized at 160°C for 15 minutes to produce a crosslinked (vulcanized) rubber composition, and the crosslinked rubber composition was used to evaluate the low heat generation property, the crack resistance, and the balance therebetween. The samples were evaluated relative to the evaluation values for Comparative Example 1 which were taken as 100.

### (1) Low heat generation property

In a dynamic viscoelasticity test using ARES (manufactured by TA Instruments), a test was performed at a frequency of 15 Hz and a temperature of 50°C to measure a loss tangent (10% tan δ) at a dynamic strain of 10%, and was indicated as an index value relative to the 10% tan δ of Comparative Example 1 which was taken as 100. A larger value indicates a better low heat generation property of the crosslinked rubber composition. The results of the evaluation were shown in Table 1.

### (2) Crack resistance

Each of the resulting rubber composition samples was subjected to a vulcanization treatment and then the tear strength was measured according to JIS K6252 in a trouser form using a tensile tester (manufactured by Shimadzu Corporation). A larger value indicates a higher crack resistance of the crosslinked rubber composition. The results of the evaluation were shown in Table 1.

### (3) Balance between low heat generation property and crack resistance

The low heat generation property index and the crack resistance index were added and then divided by 2. The resulting value was taken as the balance index between the low heat generation property and the crack resistance and was shown in Table 1. A larger index indicates a better balance between the low heat generation property and the crack resistance.

**Table 1**

| | | | Comparative Example 1 | Comparative Example 2 | Comparative Example 3 | Comparative Example 4 | Comparative Example 5 | Example 1 | Example 2 | Example 3 | Example 4 | Example 5 |
|---|---|---|---|---|---|---|---|---|---|---|---|---|
| Rubber component (A) | Natural rubber | | 50 | 50 | 50 | 50 | 50 | 50 | 50 | 50 | 50 | 50 |
| | Polybutadiene rubber | | 50 | 50 | 50 | 50 | 50 | 50 | 50 | 50 | 50 | 50 |
| Filler (B) | Carbon black | | 35 | 35 | 35 | 35 | 35 | 35 | 35 | 35 | 35 | 35 |
| | Silica | | 35 | 35 | 35 | 35 | 35 | 35 | 35 | 35 | 35 | 35 |
| Softening agent (C) | (C1) | C5-based resin | 20 | 25 | 30 | 15 | - | - | - | - | - | - |
| | (C2) | C9-based resin | - | - | - | - | 15 | 15 | 20 | 25 | - | - |
| | | Liquid polybutadiene rubber | - | - | - | - | - | - | - | - | 25 | 30 |
| | (C3) | Oil | 20 | 20 | 20 | 30 | 20 | 20 | 20 | 20 | 20 | 20 |
| | Softening agent total amount | | 40 | 45 | 50 | 45 | 35 | 35 | 40 | 45 | 45 | 50 |
| Linear polyhydric alcohol (D) | | | 3 | 3 | 3 | 3 | - | 3 | 3 | 3 | 3 | 3 |
| Sulfur | | | 1.4 | 1.4 | 1.4 | 1.4 | 1.4 | 1.4 | 1.4 | 1.4 | 1.4 | 1.4 |
| Vulcanization accelerator CZ | | | 1 | 1 | 1 | 1 | 1 | 1 | 1 | 1 | 1 | 1 |
| Vulcanization accelerator MBTS | | | 0.5 | 0.5 | 0.5 | 0.5 | 0.5 | 0.5 | 0.5 | 0.5 | 0.5 | 0.5 |
| Evaluation | Low heat generation property (index) | | 100 | 97 | 95 | 91 | 78 | 88 | 82 | 78 | 105 | 103 |
| | Crack resistance (index) | | 100 | 87 | 74 | 79 | 98 | 134 | 132 | 131 | 117 | 99 |
| | Balance | | 100 | 92 | 85 | 85 | 88 | 111 | 107 | 104 | 111 | 101 |

### Industrial Applicability

The present invention can provide a rubber composition from which a crosslinked rubber composition having a good balance between the low heat generation property and the crack resistance can be obtained. The present invention can further provide a tire having a good balance between the low hysteresis loss and the crack resistance.

## Claims

1. A rubber composition comprising:
a rubber component (A) containing a natural rubber and at least one butadiene-based rubber selected from the group consisting of a polybutadiene rubber and a styrene butadiene rubber, the natural rubber being contained in an amount of 30% by mass or more;
a filler (B);
30 to 55 parts by mass of a softening agent (C) relative to 100 parts by mass of the rubber component (A); and
1 to 6 parts by mass of a linear polyhydric alcohol (D) relative to 100 parts by mass of the rubber component (A), wherein
the softening agent (C) contains a softening agent (C1) in an amount of 0 parts by mass or more and less than 15 parts by mass relative to 100 parts by mass of the rubber component (A) and contains a softening agent (C2) in an amount of 10 parts by mass or more relative to 100 parts by mass of the rubber component (A),
an SP value (solubility parameter) difference (I SP1-SP2 |) which is the difference between an SP value (SP1) of the natural rubber and an SP value (SP2) of the softening agent (C1) is 0.30 (cal/cm³)^{1/2} or less,
an SP value difference (|SP1-SP3|) which is a difference between the SP value (SP1) of the natural rubber and an SP value (SP3) of the softening agent (C2) is more than 0.30 (cal/cm³)^{1/2}, and
the SP values of the natural rubber the softening agent (C1) and the softening agent (C2) are calculated according to the Fedors method, and wherein a polyhydric alcohol is an alcohol having three or more hydroxy groups in one molecule.

2. The rubber composition according to claim 1, wherein the polyhydric alcohol (D) is a tetra- or higher hydric alcohol.

3. The rubber composition according to claim 1 or 2, wherein the polyhydric alcohol (D) has a melting point of 170°C or lower.

4. The rubber composition according to any one of claims 1 to 3, wherein a silane coupling agent is further incorporated and the filler (B) contains a silica.

5. The rubber composition according to any one of claims 1 to 4, wherein the rubber component (A) contains a polybutadiene rubber.

6. The rubber composition according to any one of claims 1 to 5, wherein the softening agent (C 1) is at least one selected from the group consisting of a C5-based resin, a terpene-based resin, and a liquid polyisoprene having a weight average molecular weight of 50,000 or less.

7. The rubber composition according to any one of claims 1 to 6, wherein the softening agent (C2) contains at least one selected from the group consisting of a C5C9 resin, a C9-based resin, a terpene-aromatic compound-based resin, a phenolic resin, and a liquid polybutadiene rubber having a vinyl bond content of 25% or less.

8. A pneumatic tire produced by using the rubber composition according to any one of claims 1 to 7.

## Patentansprüche

1. Kautschukzusammensetzung, die Folgendes umfasst:
eine Kautschukkomponente (A), die einen Naturkautschuk und mindestens einen butadienbasierten Kautschuk, der ausgewählt ist aus der Gruppe, die aus einem Polybutadien-Kautschuk und einem Styrol-Butadien-Kautschuk besteht, enthält, wobei der Naturkautschuk in einer Menge von 30 Masse-% oder mehr enthalten ist,
einen Füllstoff (B),
30 bis 55 Masseanteile eines Weichmachers (C) im Verhältnis zu 100 Masseanteilen der Kautschukkomponente (A), und
1 bis 6 Masseanteile eines linearen mehrwertigen Alkohols (D) im Verhältnis zu 100 Masseanteilen der Kautschukkomponente (A), wobei
der Weichmacher (C) einen Weichmacher (C1) in einer Menge von 0 Masseanteilen oder mehr und weniger als 15 Masseanteilen im Verhältnis zu 100 Masseanteilen der Kautschukkomponente (A) enthält und einen Weichmacher (C2) in einer Menge von 10 Masseanteilen oder mehr im Verhältnis zu 100 Masseanteilen der Kautschukkomponente (A) enthält,
eine SP-Wert-(Löslichkeitsparameter-)Differenz (|SP1-SP2|), welche die Differenz zwischen einem SP-Wert (SP1) des Naturkautschuks und einem SP-Wert (SP2) des Weichmachers (C1) ist, 0,30 (cal/cm³)^{1/2} oder weniger beträgt,
eine SP-Wert-Differenz (|SP1-SP3|), die eine Differenz zwischen dem SP-Wert (SP1) des Naturkautschuks und einem SP-Wert (SP3) des Weichmachers (C2) ist, mehr als 0,30 (cal/cm³)^{1/2} beträgt, und
die SP-Werte des Naturkautschuks, des Weichmachers (C1) und des Weichmachers (C2) gemäß dem Feder-Verfahren berechnet werden und wobei ein mehrwertiger Alkohol ein Alkohol ist, der drei oder mehr Hydroxyl-Gruppen in einem Molekül aufweist.

2. Kautschukzusammensetzung nach Anspruch 1, wobei der mehrwertige Alkohol (D) ein vierwertiger oder höherer Alkohol ist.

3. Kautschukzusammensetzung nach Anspruch 1 oder 2, wobei der mehrwertige Alkohol (D) einen Schmelzpunkt von 170 °C oder niedriger aufweist.

4. Kautschukzusammensetzung nach einem der Ansprüche 1 bis 3, wobei ferner ein Silan-Haftvermittler eingefügt ist und der Füllstoff (B) ein Siliziumdioxid enthält.

5. Kautschukzusammensetzung nach einem der Ansprüche 1 bis 4, wobei die Kautschukkomponente (A) einen Polybutadien-Kautschuk enthält.

6. Kautschukzusammensetzung nach einem der Ansprüche 1 bis 5, wobei der Weichmacher (C1) mindestens einer ist, der ausgewählt ist aus der Gruppe, die aus einem C5-basierten Harz, einem terpenbasierten Harz und einem flüssigen Polyisopren, das ein gewichtsgemitteltes Molekulargewicht von 50 000 oder weniger aufweist, besteht.

7. Kautschukzusammensetzung nach einem der Ansprüche 1 bis 6, wobei der Weichmacher (C2) mindestens eines enthält, das ausgewählt ist aus der Gruppe, die aus einem C5C9-Harz, einem C5-basierten Harz, einem Harz auf der Basis einer aromatischen Terpenverbindung, einem Phenolharz und einem flüssigen Polybutadien-Kautschuk, der einen Vinylbindungsgehalt von 25 % oder weniger aufweist, besteht.

8. Luftreifen, hergestellt durch Verwenden der Kautschukzusammensetzung nach einem der Ansprüche 1 bis 7.

## Revendications

1. Composition de caoutchouc, comprenant :
un composant de caoutchouc (A) contenant un caoutchouc naturel et au moins un caoutchouc à base de butadiène sélectionné dans le groupe constitué d'un caoutchouc de polybutadiène et d'un caoutchouc de styrène-butadiène, le caoutchouc naturel étant contenu dans une quantité représentant 30 % en masse ou plus ;
une charge (B) ;
30 à 55 parties en masse d'un agent adoucissant (C) pour 100 parties en masse du composant de caoutchouc (A) ; et
1 à 6 parties en masse d'un alcool polyhydrique linéaire (D) pour 100 parties en masse du composant de caoutchouc (A), dans laquelle :
l'agent doucissant (C) contient un agent adoucissant (C1) en une quantité de 0 partie en masse ou plus ou moins de 15 parties en masse pour 100 parties en masse du composant de caoutchouc (A), et contient un agent adoucissant (C2) en une quantité de 10 parties en masse ou plus pour 100 parties en masse du composant de caoutchouc (A) ;
une différence de valeur SP (paramètre de solubilité) (|SP1-SP2|), constituant la différence entre une valeur SP (SP1) du caoutchouc naturel et une valeur SP (SP2) de l'agent adoucissant (C1), vaut 0,30 (cal/cm³)^{1/2} ou moins ;
une différence de valeur SP (|SP1-SP3|), constituant une différence entre la valeur SP (SP1) du caoutchouc naturel et une valeur SP (SP3) de l'agent adoucissant (C2), est supérieure à 0,30 (cal/cm³)^{1/2} ; et
les valeurs SP du caoutchouc naturel, de l'agent adoucissant (C1) et de l'agent adoucissant (C2) sont calculées selon la méthode de Fedor, et dans laquelle un alcool polyhydrique est un alcool ayant trois groupes hydroxy ou plus dans une molécule.

2. Composition de caoutchouc selon la revendication 1, dans laquelle l'alcool polyhydrique (D) est un alcool tétrahydrique ou supérieur.

3. Composition de caoutchouc selon les revendications 1 ou 2, dans laquelle l'alcool polyhydrique (D) a un point de fusion de 170 °C ou moins.

4. Composition de caoutchouc selon l'une quelconque des revendications 1 à 3, dans laquelle un agent de couplage au silane est en outre incorporé, et la charge (B) contient une silice.

5. Composition de caoutchouc selon l'une quelconque des revendications 1 à 4, dans laquelle le composant de caoutchouc (A) contient un caoutchouc de polybutadiène.

6. Composition de caoutchouc selon l'une quelconque des revendications 1 à 5, dans laquelle l'agent adoucissant (C1) est au moins un élément sélectionné dans le groupe constitué d'une résine à base de C5, d'une résine à base de terpène, et d'un polyisoprène liquide ayant un poids moléculaire moyen de 50 000 ou moins.

7. Composition de caoutchouc selon l'une quelconque des revendications 1 à 6, dans laquelle l'agent adoucissant (C2) contient au moins un élément sélectionné dans le groupe constitué d'une résine C5C9, d'une résine à base de C9, d'une résine à base d'un composé terpène aromatique, d'une résine phénolique et d'un caoutchouc de polybutadiène liquide ayant une teneur en liaison vinyle de 25 % ou moins.

8. Pneumatique produit en utilisant la composition de caoutchouc selon l'une quelconque des revendications 1 à 7.
